# EUROPÄISCHE PATENTSCHRIFT

(11) **EP 2 125 278 B1**
(45) Veröffentlichungstag und Bekanntmachung des Hinweises auf die Patenterteilung: **08.06.2011**
(21) Anmeldenummer: 08707689.9
(22) Anmeldetag: 13.02.2008
(51) Int. Cl.: B23D 13/00

(54) **STOSSWERKZEUG, INSBESONDERE NUTSTOSSWERKZEUG**
PUNCHING TOOL, IN PARTICULAR SLOTTING TOOL
OUTIL DE MORTAISAGE, EN PARTICULIER POUR LA RÉALISATION DE RAINURES

(30) Priorität: 17.02.2007 DE 102007008081
(43) Veröffentlichungstag der Anmeldung: 02.12.2009
(73) Patentinhaber: Hartmetall-Werkzeugfabrik Paul Horn GmbH, 72072 Tübingen (DE)
(72) Erfinder: SCHÄFER, Hans, 72810 Gomaringen (DE)
(74) Vertreter: Witte, Weller & Partner
(86) Internationale Anmeldenummer: PCT/EP2008/001076
(87) Internationale Veröffentlichungsnummer: WO 2008/098744

(56) Entgegenhaltungen:
- EP-A1- 1 657 012
- DE-U1- 9 014 657
- DE-U1- 9 203 373
- GB-A- 672 039

## Beschreibung

Die Erfindung betrifft ein Stoßwerkzeug, insbesondere Nutstoßwerkzeug, mit einem eine Längsachse definierenden Halter, der einen sich in Längsrichtung erstreckenden Schaft als Träger für einen Schneidkörper aufweist, der in einem Sitz des Schaftes mittels einer Klemmeinrichtung festlegbar ist, wobei der Sitz einen vom freien Ende des Schaftes einen Abstand aufweisenden, sich quer zur Längsachse erstreckenden Durchgang aufweist, dessen Innenseite Führungsflächen für Anlageflächen des in den Durchgang in einer Einführrichtung einschiebbaren Schneidkörpers bildet, wobei an Führungsflächen und an zugeordneten Anlageflächen eine Endlagenbegrenzung für den eingeschobenen Schneidkörper gebildet ist und die Klemmeinrichtung am Schneidkörper eine diesen an die Endlagenbegrenzung drückende Kraftkomponente erzeugt.

Wenn derartige Stoßwerkzeuge für Bearbeitungsvorgänge eingesetzt werden sollen, bei denen höchste Genauigkeit und hohe Oberflächengüte erforderlich sind, müssen zwei hauptsächliche Forderungen erfüllt sein. Zum einen muss durch eine hohe Festigkeit des Schaftes sichergestellt sein, dass Kräfte und Momente, insbesondere Biegemomente, die über den Schneidkörper in den Sitz eingeleitet werden, absolut sicher vom Schaft aufgenommen werden, ohne dass sich Änderungen der Geometrie ergeben. Zum zweiten muss die Lagefixierung des Schneidkörpers selbst im Sitz des Schaftes absolut sicher gestaltet sein.

Beide dieser Forderungen sind nicht ohne weiteres zu erfüllen, insbesondere wenn das Stoßwerkzeug, insbesondere bei einem Einsatz als Nutstoßwerkzeug, für Innenbearbeitung in einer Bohrung eines Werkstückes oder in einem Hohlkörper vorgesehen ist. Um in diesen Fällen eine ausreichende Arbeitstiefe zu erzielen, beispielsweise um innere Längsnuten in einer Bohrung mit ausreichender Nutlänge zu erzielen, ist es erforderlich, dass der Schaft eine entsprechende Länge besitzt. Wenn die Bearbeitung in Bohrungen mit verhältnismäßig geringem Durchmesser ausgeführt werden soll, ergibt sich zwangsläufig für den Schaft eine schlanke, langgestreckte Gestalt, was der Strukturfestigkeit abträglich ist. Zu dieser Problematik kommt hinzu, dass die Ausbildung des Sitzes für den Schneidkörper eine örtliche Verringerung des tragenden Materialquerschnittes des Schaftes bedingt, was ebenfalls die Strukturfestigkeit beeinträchtigt.

Aus der DE 90 14 657 U1 ist eine Nutstoßmaschine mit einem Nutstoßwerkzeug bekannt, das einen in Axialrichtung bewegbaren Schaft mit einem Führungskopf und einem daraus seitlich vorstehenden Nutmesser aufweist. Der Führungskopf weist eine zum Schaft koaxiale Umfangsfläche auf, und der Schaft ist auf unterschiedliche Drehstellungen um seine Achse herum einstellbar. Durch Vorschieben eines Stößels kann das Nutmesser radial aus dem Führungskopf heraus vorgeschoben werden. Das Nutmesser wird dabei von einem durch eine Blattfeder gespannten Arm in den Schaft zurückgedrängt.

Im Hinblick auf diese Problematik stellt sich die Erfindung die Aufgabe, ein Stoßwerkzeug, insbesondere Nutstoßwerkzeug, zur Verfügung zu stellen, bei dem eine besonders torsions- und biegesteife Arbeitsposition des Schneidkörpers selbst bei vergleichsweise schlanker Gestaltung des Schaftes gewährleistet ist.

Erfindungsgemäß ist diese Aufgabe durch ein Stoßwerkzeug gelöst, das die Merkmale des Patentanspruches 1 in seiner Gesamtheit aufweist.

Dadurch, dass gemäß Anspruch 1 der Sitz des Schneidwerkzeuges durch einen Durchgang im Schaft gebildet ist, der für den in den Durchgang einzuschiebenden Schneidkörper eine Führung bildet, wobei Führungsflächen des Durchganges an Anlageflächen des Schneidkörpers anliegen, ist der Schneidkörper im Durchgang passend gekammert aufgenommen und bildet dadurch einen Verstärkungskörper, der die durch die Ausbildung des Durchganges bedingte Verringerung des Materialquerschnittes des Schaftes sozusagen kompensiert. Dadurch, dass erfindungsgemäß zudem eine Endlagenbegrenzung für den eingeschobenen Schneidkörper vorgesehen ist und die Klemmeinrichtung derart ausgebildet ist, dass sie am Schneidkörper eine Kraftkomponente erzeugt, die diesen an die Endlagenbegrenzung andrückt, ergibt sich eine optimale Lagefixierung des Schneidkörpers durch die Anlage von dessen Anlageflächen an den Führungsflächen des Durchganges, in dem der Schneidkörper gekammert ist.

Erfindungsgemäß weist der Schneidkörper ferner einen im Durchgang des Schaftes aufzunehmenden Grundkörper in Form einer Platte auf, deren einander gegenüberliegenden Breitseiten Anlageflächen für die Führungsflächen des Durchganges bilden. Durch eine derart großflächige Anlage an der Innenseite des Durchganges trägt der Grundkörper des Schneidkörpers in besonderer Weise zur Verstärkung der Struktur des Schaftes bei.

Erfindungsgemäß ist weiter vorgesehen, dass die Klemmeinrichtung eine Klemmschraube aufweist, die im Grundkörper des Schneidkörpers eine Bohrung durchgreift, die zu dessen, parallele Ebenen definierenden Breitseiten senkrecht verläuft, wobei für die Klemmschraube am Schaft eine Gewindebohrung in einer der Führungsflächen des Durchganges vorgesehen ist. Diese Gestaltung eröffnet die vorteilhafte Möglichkeit, auf konstruktiv einfache Weise am Schneidkörper die gewünschte Kraftkomponente für das Anlegen an die Endlagenbegrenzung zu realisieren, indem die relativen Lageanordnungen der Bohrung im Grundkörper des Schneidkörpers, der Gewindebohrung im Durchgang des Schaftes sowie der Endlagenbegrenzung für den Schneidkörper derart gewählt sind, dass das Festziehen der Klemmschraube sowohl eine Festspannkraft als auch die in der Einführrichtung wirkende Kraftkomponente erzeugt, die das gewünschte Andrücken des vorstehenden Flächenteils des Schneidkörpers an den Gegenanschlag des Durchganges oder das Andrücken der Abschrägung des Schneidkörpers an die Schrägfläche des Durchganges des Schaftes bewirkt.

Hinsichtlich der Ausbildung der Endlagenbegrenzung kann die Anordnung so getroffen sein, dass am Schneidkörper mindestens ein aus einer Anlagefläche vorstehendes Flächenteil vorgesehen ist, das eine Anschlagfläche bildet, die beim Einschieben des Schneidkörpers zur Anlage an einen einen Gegenanschlag bildenden Absatz einer Führungsfläche des Durchganges kommt.

Bei alternativen Ausführungsbeispielen kann die Anordnung jedoch auch so getroffen sein, dass mindestens ein Flächenteil der Führungsfläche des Durchganges eine zur Einführrichtung geneigt verlaufende Schrägfläche bildet, an der beim Einschieben des Schneidkörpers eine einen Teil der Anlagefläche bildende Abschrägung des Schneidkörpers anliegend ist, wenn dieser in die gewünschte Endlage eingeschoben ist.

Ungeachtet der Ausbildung der Endlagenbegrenzung ist dadurch, dass die Klemmeinrichtung beim Festspannen des Schneidkörpers eine Kraftkomponente am Schneidkörper erzeugt, die diesen an die Endlagenbegrenzung andrückt, sichergestellt, dass die Lageeinstellung und -fixierung des Schneidkörpers mit höchster Genauigkeit erfolgt.

Vorzugsweise weist der Schneidkörper mindestens eine Schneidkante an einem sich bezüglich der Längsachse radial erstreckenden Fortsatz des Grundkörpers auf.

Bei besonders vorteilhaften Ausführungsbeispielen, die eine besonders rationelle und wirtschaftliche Herstellung von Längsnuten in Bohrungen ermöglichen, sind zur Bildung zweier Schneidkanten, die sich, zueinander diametral, vom Schaft radial vorstehend erstrecken und in zueinander entgegengesetzten Arbeitsrichtungen stoßend wirksam sind, am Grundkörper zwei zueinander entgegengesetzte Fortsätze vorgesehen.

Hierbei kann die Anordnung so getroffen sein, dass die Fortsätze zueinander achssymmetrisch gestaltet sind, vorzugsweise symmetrisch zu der Achse der Bohrung, die im Grundkörper für die Klemmschraube vorgesehen ist.

Gegenstand der Erfindung ist auch ein Schneidkörper für die Benutzung bei einem Stoßwerkzeug gemäß der Erfindung, wobei der Schneidkörper die im Anspruch 9 oder im Anspruch 10 angegebenen Merkmale aufweist.

Nachstehend ist die Erfindung anhand von in der Zeichnung dargestellten Ausführungsbeispielen im Einzelnen erläutert. Es zeigen:
- Fig. 1 eine perspektivische Schrägansicht eines Ausführungsbeispieles des erfindungsgemäßen Stoßwerkzeuges, gegenüber einer praktischen Ausführungsform nahezu in doppeltem Massstab dargestellt;
- Fig. 2 eine gegenüber Fig. 1 in noch größerem Maßstab gezeichnete, perspektivische Schrägansicht eines Schneidkörpers für das Ausführungsbeispiel von Fig. 1;
- Fig. 3 eine annähernd im Maßstab von Fig. 1 gezeichnete Seitenansicht des Ausführungsbeispieles;
- Fig. 4 einen Längsschnitt entsprechend der Schnittlinie IV-IV von Fig. 3;
- Fig. 5 einen der Fig. 4 entsprechenden Längsschnitt eines zweiten Ausführungsbeispieles des Stoßwerkzeuges, wobei in abgebrochener Darstellung lediglich der vordere Teil des Schaftes gezeigt ist;
- Fig. 6 eine der Fig. 3 ähnliche Seitenansicht sowohl des ersten als auch des zweiten Ausführungsbeispieles, jedoch gegenüber Fig. 3 um 90 Grad verdreht und wobei sich der Schaft innerhalb der zu bearbeitenden Bohrung eines schematisiert angedeuteten Werkstückes befindet;
- Fig. 7 einen gegenüber Fig. 6 etwa 1 16-fach vergrößert gezeichneten Schnitt entsprechend der Schnittlinie VII-VII von Fig. 6, wobei das Werkstück nicht dargestellt ist;
- Fig. 8 und 9 eine Vorderansicht bzw. Seitenansicht des in Fig. 2 in Perspektive dargestellten Schneidkörpers des ersten Ausführungsbeispieles, gegenüber einer praktischen Ausführungsform, etwa in 3 ½-facher Vergrößerung gezeichnet;
- Fig. 10 eine der Fig. 8 entsprechende Vorderansicht des Schneidkörpers für das zweite Ausführungsbeispiel des Stoßwerkzeuges und
- Fig. 11 eine gegenüber einer praktischen Ausführungsform in etwa 8-facher Vergrößerung dargestellter Draufsicht des Schneidkörpers des ersten Ausführungsbeispieles.

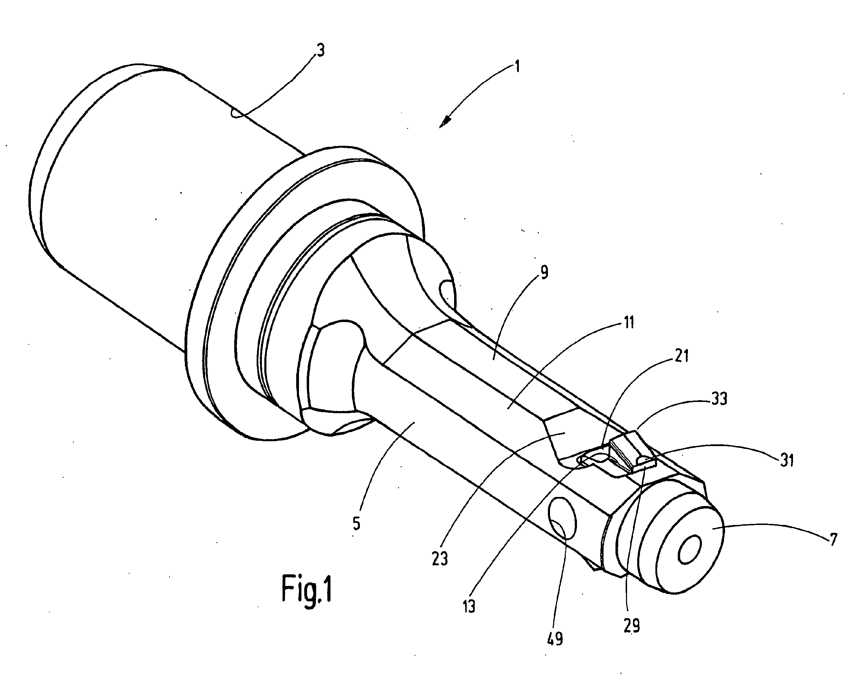

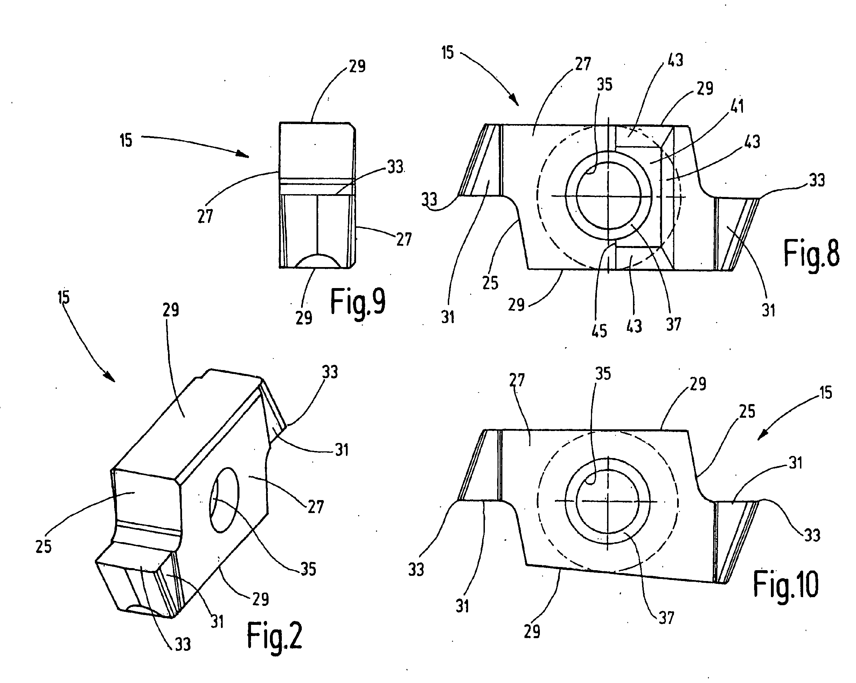

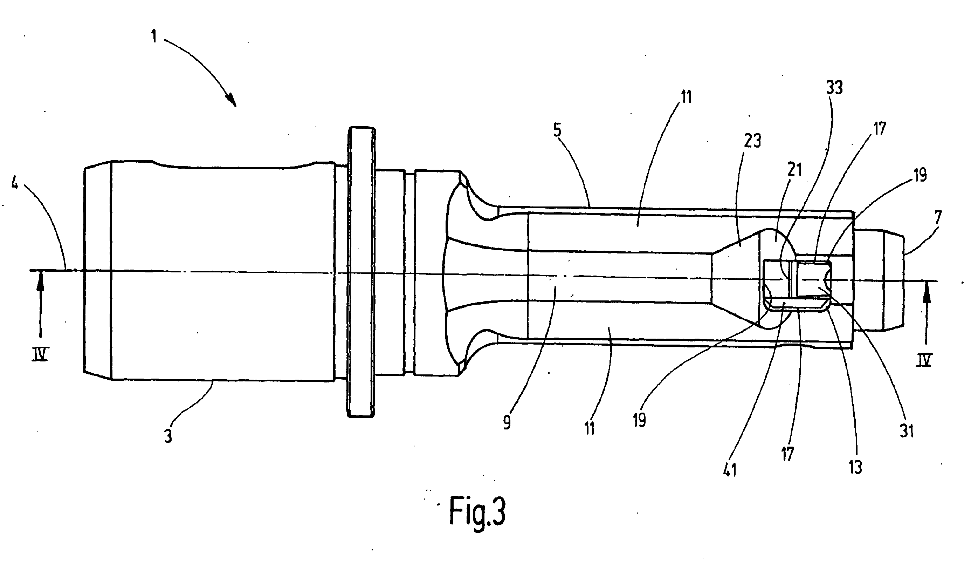

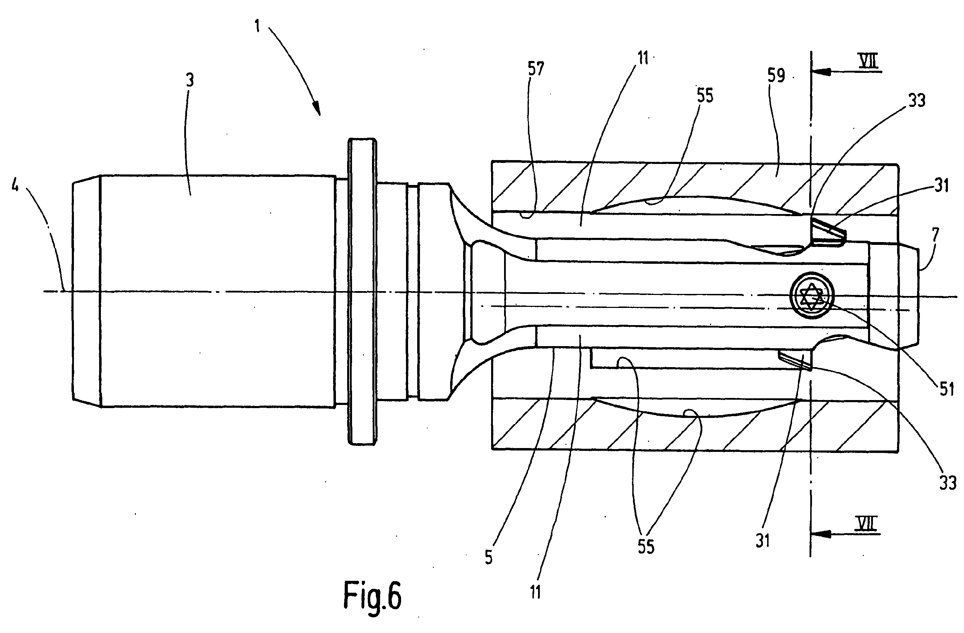

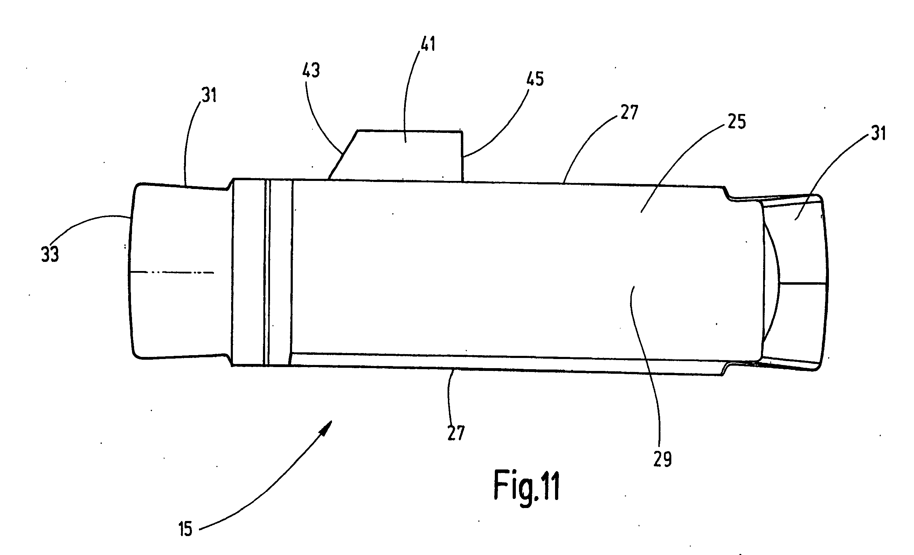

Der in Fig. 1 und 3 als Ganzes mit 1 bezeichnete Halter weist ein rückwärtiges Einspannteil 3 auf, mit dem das Stoßwerkzeug in einer nicht dargestellten Werkzeugmaschine einspannbar ist, mittels deren das Werkzeug in Richtung der Werkzeuglängsachse 4 (Fig. 3 und 6) für eine hingehende Stoßbearbeitung in Vorwärtsrichtung und eine hergehende Stoßbearbeitung in Rückwärtsrichtung bewegbar ist. An das Einspannteil 3 schließt sich ein Schaft 5 an, der gegenüber dem Einspannteil 3 verjüngt ist und dessen vorderes Schaftende mit 7 bezeichnet ist. Während das Einspannteil 3 im großen Ganzen kreiszylinderförmig ist, weist die Außenfläche des Schaftes 5 eine Konturierung mit flachen Flächenbereichen 9 und 11 auf, siehe insbesondere Fig. 1. In geringem Abstand vom vorderen Ende 7 weist der Schaft 5 einen Durchgang 13 auf, dessen Innenseite Führungsflächen für einen in einer Einführrichtung einschiebbaren Schneidkörper, der in den Fig. als Ganzes mit 15 bezeichnet ist, bilden. Nähere Einzelheiten des Schneidkörpers 15 sind insbesondere in den Fig. 8 bis 11 verdeutlicht. Der Durchgang 13 weist innere Führungsflächen 17 in zueinander und zur Längsachse 4 parallelen Ebenen sowie Führungsflächen 19 in quer zur Längsachse 4 verlaufenden Ebenen auf. In Zusammenwirkung mit Anlageflächen des einzuschiebenden Schneidkörpers 15 bilden diese Führungsflächen 17 und 19 eine passende Führung, in die der Schneidkörper 15 in einer Einführrichtung einschiebbar ist, und zwar von einem Eingangsende des Durchganges 13 her, das in den Fig. 1, 3 sowie 4 und 5 als das oben liegende Ende des Durchganges 13 dargestellt ist, wo der Durchgang über Schrägflächen 21 und 23 erweitert ist. Vom Einführende her ist der Schneidkörper 15 bis in eine Endposition einschiebbar, die durch eine Endlagenbegrenzung definiert ist und in der die Führungsflächen 17 und 19 passend an den zugeordneten Anlageflächen des Schneidkörpers 15 anliegen.

Wie erwähnt, zeigen die Fig. 8 bis 11 nähere Einzelheiten des Schneidkörpers 15, wobei die Fig. 8, 9 und 11 einen Schneidkörper 15 für ein erstes Ausführungsbeispiel und die Fig. 10 einen Schneidkörper 15 für ein zweites Ausführungsbeispiel zeigen. Bei beiden Ausführungsbeispielen weist der Schneidkörper 15 einen plattenartigen Grundkörper 25 auf, dessen Breitseiten 27 in zueinander parallelen Ebenen verlaufen. Diese Breitseiten 27 bilden mit Flächenbereichen die Anlageflächen für die Führungsflächen 17 des Durchganges 13. Der im großen Ganzen rechteckförmige Grundkörper 25 bildet mit seinen ebenflächigen, zueinander parallelen Schmalseiten 29 die Anlageflächen für die Führungsflächen 19 im Durchgang 13.

Die Schneidkörper 15 beider Ausführungsbeispiele weisen an zwei einander diametral entgegengesetzten Eckbereichen des Grundkörpers 25 Fortsätze 31 auf, die zueinander achssymmetrisch geformt sind und jeweils eine Schneidkante 33 bilden. Wie am deutlichsten aus Fig. 8 zu ersehen ist, sind die Fortsätze 31 zur Achse einer Durchgangsbohrung 35 symmetrisch, die sich im Zentrum der Breitseiten 27 des Grundkörpers 25 befindet und an einem Bohrungsende eine konische Erweiterung 37 aufweist.

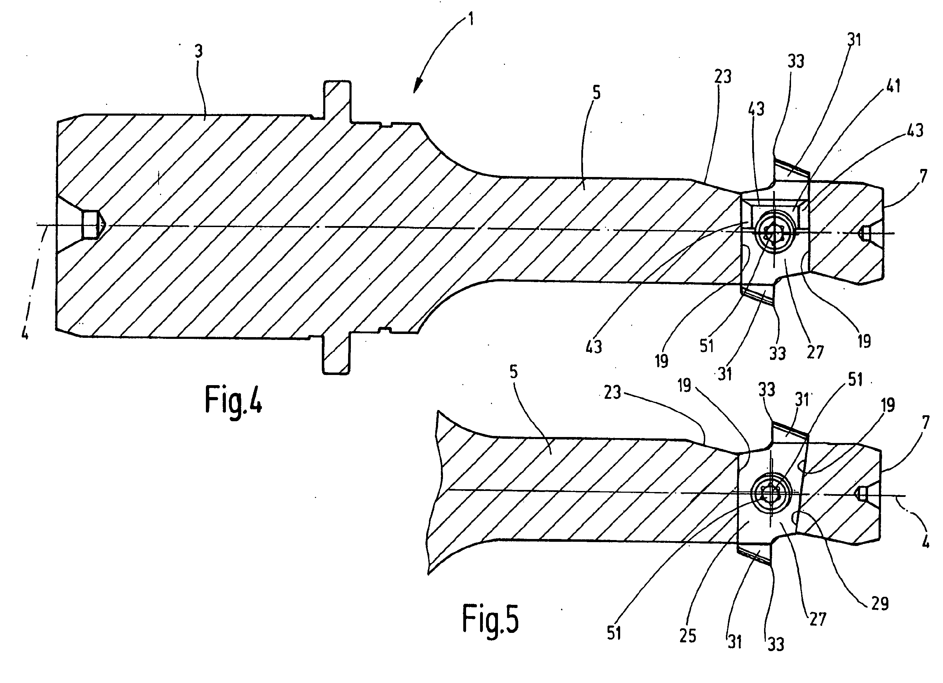

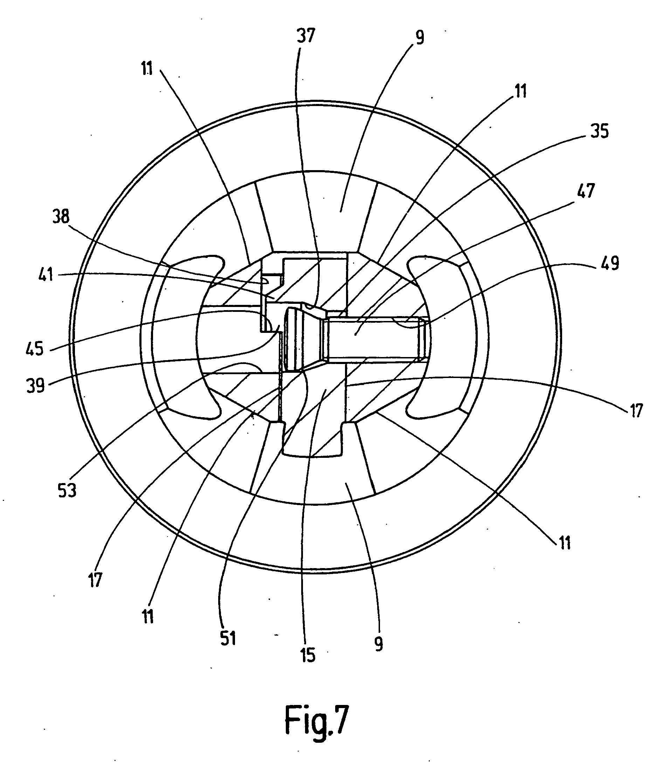

Wie bereits erwähnt, ist der Schneidkörper 15 vom Einführende des Durchganges 13 her in einer Einführrichtung in die Führung einschiebbar, in der Führungsflächen 17, 19 an den durch die Breitseiten 27 und die Schmalseiten 29 des Schneidkörpers gebildeten Anlageflächen geführt sind, und zwar bis zu einer Endlagenbegrenzung hin. Das erste und das zweite hier zu beschreibende Ausführungsbeispiel unterscheiden sich lediglich hinsichtlich der Ausbildung der Endlagenbegrenzung. Wie dies in Fig. 7 gezeigt ist, ist beim ersten Ausführungsbeispiel zu diesem Zwecke im Durchgang 13 eine Erweiterung 38 vorgesehen, durch die an der Führungsfläche 17 ein Absatz 39 gebildet wird. Dieser Absatz 39 bildet einen Gegenanschlag für eine Anschlagfläche, die am Grundkörper 25 des Schneidkörpers 15 ausgebildet ist. Die diesbezügliche Gestaltung am Grundkörper 25 ist am besten aus den Fig. 4, 8 und insbesondere 11 ersichtlich. Wie dort gezeigt, erhebt sich aus der einen Breitseite 27 des Grundkörpers 25 ein Höcker 41, der ein an drei Seiten durch Abschrägungen 43 begrenztes Plateau mit einer hierzu senkrechten, an der vierten Seite befindlichen Anschlagfläche 45 bildet, die bei der Endlage des Schneidkörpers 15 im Durchgang 13 mit dem den Gegenanschlag bildenden Absatz 39 im Durchgang 13 zusammenwirkt. Wie bereits erwähnt, weist der Grundkörper 25 des Schneidkörpers eine zentrale Bohrung 35 mit endseitiger konischer Erweiterung 37 auf. Als Bestandteil der Klemmeinrichtung ist diese Bohrung 35 von einer Klemmschraube 47 durchgriffen, die in eine an der Führungsfläche 17 des Durchganges 13 mündende Gewindebohrung 49 einschraubbar ist. Die Klemmschraube 47 weist in der Art einer Senkkopfschraube einen sich vom Schraubenschaft konisch erweiternden Schraubenkopf 51 auf. Wie am besten aus Fig. 7 ersichtlich ist, in der der Schneidkörper 15 in seiner Endlage dargestellt ist, sind die Gewindebohrung 49 sowie die Durchgangsbohrung 35 im Grundkörper 25 des Schneidkörpers 15 derart zueinander exzentrisch, dass beim Festziehen der Klemmschraube 47 der konische Kopf 51 in Zusammenwirkung mit der konischen Enderweiterung 37 der Bohrung 35 eine Kraftkomponente am Schneidkörper 15 erzeugt, die diesen bei Blickrichtung entsprechend Fig. 7 nach unten drängt. Dies bedeutet, dass die Klemmschraube 47 den Schneidkörper 15 nicht nur festspannt, indem die Breitseite 27 des Grundkörpers 25 an die Führungsfläche 17 des Durchganges 13 gepreßt wird, sondern dass die am Höcker 41 des Schneidkörpers 15 ausgebildete Anschlagfläche 45 für die definierte Endlagenbegrenzung an den Absatz 39 im Durchgang 13 angepreßt wird.

Wie der Vergleich der Fig. 8 und 10 zeigt, weist der Schneidkörper 15 des zweiten Ausführungsbeispieles keinen Höcker 41 am Grundkörper 25 auf. Stattdessen weist zur Bildung der Endlagenbegrenzung die in Fig. 10 unten liegende Schmalseite 29 des Grundkörpers 25 eine Neigung gegenüber der anderen Schmalseite 29 auf, die beim gezeigten Ausführungsbeispiel etwa in der Größenordnung von 11 Winkelgrad liegt. In entsprechender Weise ist, wie dies in Fig. 5 dargestellt ist, ist die zugeordnete Führungsfläche 19 des Durchganges 13 mit einer entsprechenden Neigung versehen. Während beim ersten Ausführungsbeispiel der Durchgang 13 an derjenigen Führungsfläche 17, die mit der Durchtrittsöffnung 53 für die Klemmschraube 47 versehen ist, eine den Absatz 39 bildende Erweiterung 38 als Gegenanschlag für den Höcker 41 des Schneidkörpers aufweist, ist beim zweiten Ausführungsbeispiel diese Führungsfläche 17, bis auf die Öffnung 53, durchgehend. In gleicher Weise wie bei dem ersten Ausführungsbeispiel sind jedoch auch beim zweiten Ausführungsbeispiel die Gewindebohrung 49 sowie die Bohrung 35 im Grundkörper 25 des Schneidkörpers 15 so exzentrisch, dass beim Festziehen der Klemmschraube 47 die Konusfläche am Kopf 51 in Zusammenwirkung mit der konischen Erweiterung 37 der Bohrung 35 eine Kraftkomponente am Schneidkörper 15 entlang der Führungsflächen 17 erzeugt, derart, dass bei der Endlage die schräg verlaufende Schmalseite 29 des Grundkörpers 25 und die schräg verlaufende Führungsfläche 19 des Durchganges 13 aneinander anliegen, wodurch die Einschiebebewegung durch die resultierende Verengung der Führung in der Endlage begrenzt ist.

Dadurch, dass bei beiden Ausführungsbeispielen am Grundkörper 25 des Schneidkörpers 15 zueinander symmetrische Fortsätze 31 mit Schneidkanten 33 vorgesehen sind, ist das erfindungsgemäße Werkzeug in besonderem Maße geeignet, um in sozusagen "kontinuierlicher" Bearbeitung mehrere Längsnuten 55 in der Bohrung 57 eines Werkstückes 59 auszubilden, das in Fig. 6 lediglich schematisiert angedeutet ist. Durch die symmetrische Anordnung der Fortsätze 31 mit den Schneidkanten 33 wirkt das Werkzeug bei hingehender Arbeitsbewegung und bei hergehender Arbeitsbewegung stoßend, so dass bei einem Arbeitsspiel, bei dem eine hingehende und hergehende Relativbewegung zwischen Halter 1 und Werkstück 59 erzeugt wird, beispielsweise indem der Halter longitudinal angetrieben ist, zwei einander gegenüberliegende Nuten 55 bearbeitet werden können. Hierbei kann die radiale Zustellbewegung entweder durch dem Werkstück 59 vermittelte Vorschubbewegungen oder durch Zustellen des Halters 1 erfolgen. Um am Innenumfang der betreffenden Bohrung 57 verteilte Nuten 55 zu erzeugen, kann das Werkstück 59 relativ zum Halter 1 verdreht werden oder letzterer relativ zum Werkstück 59 gedreht werden.

## Patentansprüche

1. Stoßwerkzeug, insbesondere Nutstoßwerkzeug, mit einem eine Längsachse (4) definierenden Halter (1), der einen sich in Längsrichtung erstreckenden Schaft (5) als Träger für einen Schneidkörper (15) aufweist, der in einem Sitz des Schaftes (5) mittels einer Klemmeinrichtung (47) festlegbar ist, wobei der Sitz einen vom freien Ende (7) des Schaftes (5) einen Abstand aufweisenden, sich quer zur Längsachse (4) erstreckenden Durchgang (13) aufweist, dessen Innenseite Führungsflächen (17, 19) für Anlageflächen (27, 29) des in den Durchgang (13) in einer Einführrichtung einschiebbaren Schneidkörpers (15) bildet, wobei an Führungsflächen (17, 19) und an zugeordneten Anlageflächen (27, 29) eine Endlagenbegrenzung für den eingeschobenen Schneidkörper (15) gebildet ist und die Klemmeinrichtung (47) am Schneidkörper (15) eine diesen an die Endlagenbegrenzung drückende Kraftkomponente erzeugt,
**dadurch gekennzeichnet, dass** der Schneidkörper (15) einen im Durchgang (13) des Schaftes (5) aufzunehmenden Grundkörper (25) in Form einer Platte aufweist, deren einander gegenüberliegenden Breitseiten (27) Anlageflächen für die Führungsflächen (17) des Durchganges (13) bilden, dass die Klemmeinrichtung eine Klemmschraube (47) aufweist, die im Grundkörper (25) des Schneidkörpers (15) eine Bohrung (35) durchgreift, die zu dessen, parallele Ebenen definierenden Breitseiten (27) senkrecht verläuft, und dass für die Klemmschraube (47) am Schaft (5) eine Gewindebohrung (49) in einer der Führungsflächen (17) des Durchganges (13) vorgesehen ist.

2. Stoßwerkzeug nach Anspruch 1, **dadurch gekennzeichnet, dass** zur Bildung der Endlagenbegrenzung am Schneidkörper (15) mindestens ein aus einer Anlagefläche (27) vorstehendes Flächenteil (41, 43) vorgesehen ist, das eine Anschlagfläche (45) bildet, die beim Einschieben des Schneidkörpers (15) zur Anlage an einen einen Gegenanschlag bildenden Absatz (39) einer Führungsfläche (17) des Durchganges (13) kommt.

3. Stoßwerkzeug nach Anspruch 1, **dadurch gekennzeichnet, dass** zur Bildung der Endlagenbegrenzung mindestens ein Flächenteil der Führungsfläche (17) des Durchganges (13) eine zur Einführrichtung geneigt verlaufende Schrägfläche bildet, an der beim Einschieben des Schneidkörpers (15) eine einen Teil der Anlageflächen (29) bildende Abschrägung des Schneidkörpers (15) anliegt.

4. Stoßwerkzeug nach einem der Ansprüche 1 bis 3, **dadurch gekennzeichnet, dass** die relativen Lageanordnungen der Bohrung (35) im Grundkörper (25) des Schneidkörpers (15), der Gewindebohrung (49) im Durchgang (13) des Schaftes (5) sowie der Endlagenbegrenzung für den Schneidkörper (15) derart gewählt sind, dass an diesem beim Festziehen der Klemmschraube (47) die Kraftkomponente für das Andrücken der Anschlagfläche (45) des Schneidkörpers (15) an den Gegenanschlag (39) des Durchganges (13) oder der Abschrägung des Schneidkörpers (15) an die Schrägfläche des Durchganges (13) des Schaftes (5) erzeugt wird.

5. Stoßwerkzeug nach einem der Ansprüche 1 bis 4, **dadurch gekennzeichnet, dass** der Schneidkörper (15) mindestens eine Schneidkante (33) an einem sich bezüglich der Längsachse (4) radial erstreckenden Fortsatz (31) des Grundkörpers (25) aufweist.

6. Stoßwerkzeug nach Anspruch 5, **dadurch gekennzeichnet, dass** zur Bildung zweier Schneidkanten (33), die sich, zueinander diametral, vom Schaft (5) radial vorstehend erstrecken und in zueinander entgegengesetzten Arbeitsrichtungen stoßend wirksam sind, am Grundkörper (25) zwei zueinander entgegengesetzte Fortsätze (31) vorgesehen sind.

7. Stoßwerkzeug nach Anspruch 6, **dadurch gekennzeichnet, dass** die Fortsätze (31) zueinander achssymmetrisch gestaltet sind.

8. Stoßwerkzeug nach Anspruch 7, **dadurch gekennzeichnet, dass** die Fortsätze (31) zu der Achse der Bohrung (35) des Grundkörpers (25) symmetrisch sind.

9. Schneidkörper für ein Stoßwerkzeug nach einem der Ansprüche 2, 4-8, mit einem plattenartigen Grundkörper (25), der zwei an einander diametral entgegengesetzten Eckbereichen des Grundkörpers (25) jeweils eine Schneidkante (33) bildende Fortsätze (31) aufweist, mit einem an einer Breitseite (27) des plattenartigen Grundkörpers (25) vorspringenden Höcker (41) mit einer Abstufung (45), die eine Anschlagfläche für einen Gegenanschlag (39) im Sitz (13) des Werkzeughalters (1) bildet, und mit einer Bohrung (35) im Grundkörper (25), die zu einander gegenüberliegenden, parallele Ebenen definierenden Breitseiten (27) des Grundkörpers (25) senkrecht verläuft.

10. Schneidkörper für ein Stoßwerkzeug nach einem der Ansprüche 3 bis 8, mit einem plattenartigen Grundkörper (25), der zwei an einander diametral entgegengesetzten Eckbereichen des Grundkörpers (25) jeweils eine Schneidkante (33) bildende Fortsätze (31) aufweist und dessen zwischen den Fortsätzen liegende Schmalseiten (29) als geneigt zueinander verlaufende Schrägflächen ausgebildet sind, die für die Endlagenpositionierung an im Sitz (13) des Werkzeughalters (1) ausgebildete Schrägflächen (19) anlegbar sind, und mit einer Bohrung (35) im Grundkörper (25), die zu einander gegenüberliegenden, parallele Ebenen definierenden Breitseiten (27) des Grundkörpers (25) senkrecht verläuft.

## Claims

1. Slotting tool, in particular a keyway slotting tool, comprising a holder (1) which defines a longitudinal axis (4) and has a shank (5), extending in the longitudinal direction, as support for a cutting body (15) which can be fixed in a seat of the shank (5) by means of a clamping device (47), wherein the seat has a passage (13) which is at a distance from the free end (7) of the shank (5) and extends transversely to the longitudinal axis (4) and the inside of which forms guide surfaces (17, 19) for bearing surfaces (27, 29) of the cutting body (15), which can be pushed into the passage (13) in an insertion direction, wherein an end-position limit for the pushed-in cutting body (15) is formed on guide surfaces (17, 19) and on associated bearing surfaces (27, 29), and the clamping device (47) produces a force component on the cutting body (15) which presses the latter against the end-position limit, **characterized in that** the cutting body (15) has a parent member (25) in the form of a plate which is to be accommodated in the passage (13) of the shank (5) and whose wide sides (27) opposite one another form bearing surfaces for the guide surfaces (17) of the passage (13), **in that** the clamping device has a clamping screw (47) which passes through a hole (35) in the parent member (25) of the cutting body (15), said hole (35) running perpendicularly to the wide sides (27), defining parallel planes, of said parent member (25), and **in that**, for the clamping screw (47), a tapped hole (49) is provided on the shank (5) in one of the guide surfaces (17) of the passage (13).

2. Slotting tool according to Claim 1, **characterized in that**, to form the end-position limit, at least one surface part (41, 43) projecting from a bearing surface (27) is provided on the cutting body (15), said surface part (41, 43) forming a stop surface (45) which, when the cutting body (15) is pushed in, comes to bear against a step (39), forming a counter-stop, of a guide surface (17) of the passage (13).

3. Slotting tool according to Claim 1, **characterized in that**, to form the end-position limit, at least one surface part of the guide surface (17) of the passage (13) forms a sloping surface which is inclined relative to the insertion direction and against which a slope, forming part of the bearing surface (29), of the cutting body (15) bears when the cutting body (15) is pushed in.

4. Slotting tool according to one of Claims 1 to 3, **characterized in that** the relative positional arrangements of the hole (35) in the parent member (25) of the cutting body (15), of the tapped hole (49) in the passage (13) of the shank (5) and of the end-position limit for the cutting body (15) are selected in such a way that, when the clamping screw (47) is tightened, the force component for pressing the stop surface (45) of the cutting body (15) against the counter-stop (39) of the passage (13) or for pressing the slope of the cutting body (15) against the sloping surface of the passage (13) of the shank (5) is produced on said cutting body (15).

5. Slotting tool according to one of Claims 1 to 4, **characterized in that** the cutting body (15) has at least one cutting edge (33) on an extension (31), extending radially relative to the longitudinal axis (4), of the parent member (25).

6. Slotting tool according to Claim 5, **characterized in that** two extensions (31) opposed to one another are provided on the parent member (25) in order to form two cutting edges (33) which extend in a radially projecting manner, diametrically relative to one another, from the shank (5) and work with a pushing action in working directions opposed to one another.

7. Slotting tool according to Claim 6, **characterized in that** the extensions (31) are designed to be axially symmetrical to one another.

8. Slotting tool according to Claim 7, **characterized in that** the extensions (3 1) are symmetrical to the axis of the hole (35) in the parent member (25).

9. Cutting body for a slotting tool according to one of Claims 2, 4-8, comprising a plate-like parent member (25) which has two extensions (31) forming in each case one cutting edge (33) at mutually diametrically opposite corner regions of the parent member (25), and comprising a hump (41) projecting on a wide side (27) of the plate-like parent member (25) and having a step (45) which forms a stop surface for a counter-stop (39) in the seat (13) of the tool holder (1), and comprising a hole (35) in the parent member (25), which hole runs perpendicular to wide sides (27) of the parent member (25) which define mutually opposite parallel planes.

10. Cutting body for a slotting tool according to one of Claims 3 to 8, comprising a plate-like parent member (25) which has two extensions (31) forming in each case one cutting edge (33) at mutually diametrically opposite corner regions of the parent member (25), and the narrow sides (29), which are situated between the extensions, of said parent member are designed as sloping surfaces which run obliquely to one another and which, for the end-position limit, can be brought to bear against sloping surfaces (19) formed in the seat (13) of the tool holder (1), and comprising a hole (35) in the parent member (25), which hole runs perpendicular to wide sides (27) of the parent member (25) which define mutually opposite parallel planes.

## Revendications

1. Outil à impact, en particulier outil à impact pour la réalisation de rainures, comprenant un porte-outil (1) définissant un axe longitudinal (4), qui présente un arbre (5) s'étendant dans la direction longitudinale en tant que support pour un corps de coupe (15) qui peut être fixé dans un siège de l'arbre (5) au moyen d'un dispositif de serrage (47), le siège présentant un passage (13) espacé d'une extrémité libre (7) de l'arbre (5), s'étendant transversalement à l'axe longitudinal (4), dont le côté intérieur forme des faces de guidage (17, 19) pour des faces d'appui (27, 29) du corps de coupe (15) pouvant être enfoncé dans le passage (13) dans une direction d'insertion, une limite de position de fin de course étant formée au niveau des faces de guidage (17, 19) et des faces d'appui associées (27, 29) pour le corps de coupe (15) enfoncé, et le dispositif de serrage (47) produisant sur le corps de coupe (15) une composante de force pressant celui-ci contre la limite de position de fin de course, **caractérisé en ce que** le corps de coupe (15) présente un corps de base (25) de type plaque devant être reçu dans le passage (13) de l'arbre (5), dont les côtés larges (27) opposés l'un à l'autre forment des faces d'appui pour les faces de guidage (17) du passage (13), **en ce que** le dispositif de serrage présente une vis de serrage (47), qui traverse un alésage (35) dans le corps de base (25) du corps de coupe (15), lequel s'étend perpendiculairement à ses côtés larges (27) définissant des plans parallèles, et **en ce qu'**un alésage fileté (49) dans l'une des faces de guidage (17) du passage (13) est prévu pour la vis de serrage (47) sur l'arbre (5).

2. Outil à impact selon la revendication 1, **caractérisé en ce que** pour former la limite de position de fin de course sur le corps de coupe (15), on prévoit au moins une partie de face (41, 43) saillant depuis une face d'appui (27), laquelle forme une face de butée (45) qui, lors de l'insertion du corps de coupe (15), vient en appui contre un épaulement (39) d'une face de guidage (17) du passage (13) formant une contre-butée.

3. Outil à impact selon la revendication 1, **caractérisé en ce que**, pour former la limite de position de fin de course, au moins une partie de face de la face de guidage (17) du passage (13) forme une face oblique s'étendant de manière inclinée par rapport à la direction d'insertion, contre laquelle s'applique un biseau du corps de coupe (15) formant une partie des faces d'appui (29) lors de l'insertion du corps de coupe (15).

4. Outil à impact selon l'une quelconque des revendications 1 à 3, **caractérisé en ce que** les agencements de positions relatives de l'alésage (35) dans le corps de base (25) du corps de coupe (15), de l'alésage fileté (49) dans le passage (13) de l'arbre (5) ainsi que de la limite de position de fin de course pour le corps de coupe (15) sont choisis de telle sorte que sur celui-ci, lors du serrage de la vis de serrage (47), s'applique la composante de force pour la pression de la face de butée (45) du corps de coupe (15) contre la contre-butée (39) du passage (13) ou du biseau du corps de coupe (15) contre la face oblique du passage (13) de l'arbre (5).

5. Outil à impact selon l'une quelconque des revendications 1 à 4, **caractérisé en ce que** le corps de coupe (15) présente au moins une arête de coupe (33) sur une saillie (31) du corps de base (25) s'étendant radialement par rapport à l'axe longitudinal (4).

6. Outil à impact selon la revendication 5, **caractérisé en ce que**, pour former deux arêtes de coupe (33) qui s'étendent en saillie radialement depuis l'arbre (5), de manière diamétralement opposée, et qui sont actives en aboutement dans des directions de travail mutuellement opposées, on prévoit sur le corps de base (25) deux saillies (31) mutuellement opposées.

7. Outil à impact selon la revendication 6, **caractérisé en ce que** les saillies (31) sont configurées avec une symétrie axiale l'une par rapport à l'autre.

8. Outil à impact selon la revendication 7, **caractérisé en ce que** les saillies (31) sont symétriques par rapport à l'axe de l'alésage (35) du corps de base (25).

9. Corps de coupe pour un outil à impact selon l'une quelconque des revendications 2, 4 à 8, comprenant un corps de base de type plaque (25), qui présente deux saillies (31) formant à chaque fois une arête de coupe (33) au niveau de régions de coin diamétralement opposées du corps de base (25), une protubérance (41) saillant au niveau d'un côté large (27) du corps de base de type plaque (25) avec un gradin (45), qui forme une face de butée pour une contre-butée (39) dans le siège (13) du porte-outil (1), et un alésage (35) dans le corps de base (25), qui s'étend perpendiculairement par rapport à des côtés larges (27) du corps de base (25) opposés l'un à l'autre et définissant des plans parallèles.

10. Corps de coupe pour un outil à impact selon l'une quelconque des revendications 3 à 8, comprenant un corps de base de type plaque (25), qui présente deux saillies (31) formant à chaque fois une arête de coupe (33) au niveau de régions de coin diamétralement opposées du corps de base (25), et dont les côtés étroits (29) situés entre les saillies sont réalisés sous forme de faces obliques s'étendant de manière inclinée l'une par rapport à l'autre, qui peuvent être appliquées pour le positionnement en position de fin de course contre des faces obliques (19) réalisées dans le siège (13) du porte-outil (1), et comprenant un alésage (35) dans le corps de base (25), lequel s'étend perpendiculairement par rapport à des côtés larges (27) du corps de base (25) opposés l'un à l'autre et définissait des plans parallèles.
